# EUROPÄISCHE PATENTANMELDUNG

(11) **EP 1 923 688 A1**
(43) Veröffentlichungstag der Anmeldung: **21.05.2008**
(21) Anmeldenummer: 06023988.6
(22) Anmeldetag: 18.11.2006
(51) Int. Cl.: G01N 3/30, G01N 3/303, G01M 7/08

(54) **Vorrichtung zum Prüfen des Verhaltens von Gegenständen bei Beschleunigungsvorgängen**

(71) Anmelder: Sebert Schwingungstechnik GmbH, 73230 Kirchheim/Teck (DE)
(72) Erfinder: Karl Sebert, 73230 Kirchheim/Teck (DE)
(74) Vertreter: Vetter, Hans

(57) **Zusammenfassung**

Es wird eine Vorrichtung zum Prüfen des Verhaltens von Gegenständen (12), insbesondere von elektronischen Geräten, bei positiven und negativen Beschleunigungsvorgängen vorgeschlagen. Die zu prüfenden Gegenstände (12) sind an einem Aufnahmeelement fixierbar. Neben Mitteln (13) zum Beschleunigen des Aufnahmeelements (10) ist zum Verzögern beziehungsweise Abbremsen desselben wenigstens ein sich in der Bewegungsrichtung (A) verjüngender kegelförmiger Verzögerungskörper (18) am Aufnahmeelement (10) angeordnet, wobei in der Bewegungsrichtung (A) vor dem Aufnahmeelement (10) wenigstens ein Lochkörper (20) angeordnet ist, der ein in der Bewegungsbahn des Verzögerungskörpers (18) liegendes Loch (19) aufweist, dessen Querschnitt kleiner als der größte Querschnitt des Verzögerungskörpers (18) ist. Hierdurch kann zum Prüfen des jeweiligen Gegenstands auf einfache und kostengünstige Weise ein exakt definierter Beschleunigungsvorgang und ein exakt definierbarer Verzögerungsvorgang erzielt werden.

## Beschreibung

Die Erfindung betrifft eine Vorrichtung zum Prüfen des Verhaltens von Gegenständen, insbesondere von elektronischen Geräten, bei positiven und negativen Beschleunigungsvorgängen nach der Gattung des Anspruchs 1.

Elektronische Geräte, die bei ihrem Einsatz starken positiven und/oder negativen Beschleunigungen unterliegen, beispielsweise elektronische Geräte in Raketen, Flugzeugen, Rennwagen, Schiffen und dergleichen, müssen vorab geprüft werden, ob sie die bei ihrem späteren Einsatz auftretenden Belastungen aushalten. Hierzu müssen Versuchsbedingungen geschaffen werden, bei denen den späteren Belastungen entsprechende Belastungen erzeugt werden können. Diese Belastungen, also Beschleunigungen und Verzögerungen, müssen dabei sehr exakt und reproduzierbar eingestellt werden können.

Eine Aufgabe der vorliegenden Erfindung besteht darin, eine Vorrichtung der eingangs genannten Gattung zu schaffen, mit der exakt reproduzierbare Beschleunigungen und Verzögerungen auf einfache und kostengünstige Weise auf einen zu prüfenden Gegenstand ausgeübt werden können.

Diese Aufgabe wird erfindungsgemäß durch eine Vorrichtung mit den Merkmalen des Anspruchs 1 gelöst.

Bei der erfindungsgemäßen Vorrichtung kann insbesondere die negative Beschleunigung, also die Verzögerung, sehr exakt und reproduzierbar eingestellt werden, nämlich sowohl durch Variation des Kegelwinkels des Verzögerungskörpers als auch durch Variation des Materials von Verzögerungskörper und Lochkörper oder durch Variation der Wandstärken, also beispielsweise der Wandstärke des Lochkörpers. Als besonders kostengünstige Lösung bietet es sich an, den Lochkörper aus einem weniger festen Material herzustellen, sodass sich lediglich dieser bei der Verzögerung verformt und kostengünstig ausgetauscht werden kann.

Durch die in den Unteransprüchen aufgeführten Maßnahmen sind vorteilhafte Weiterbildungen und Verbesserungen der im Anspruch 1 angegebenen Vorrichtung möglich.

Der Verzögerungskörper und/oder der Lochkörper bestehen aus einem sich bei gegenseitiger Krafteinwirkung verformenden Material, wobei durch Wahl dieses Materials die Größe der Verzögerung miteingestellt werden kann. Vorzugsweise wird dabei der Verzögerungskörper aus einem festeren Material und/oder mit größerer Wandstärke oder als Massivkörper hergestellt, vorzugsweise aus Metall, wobei auch Kunststoff möglich wäre.

Zur Einstellung des Verzögerungswerts kann auch der Verzögerungskörper und/oder der Lochkörper in vorteilhafter Weise wenigstens an den beim Eintauchen des Verzögerungskörpers in den Lochkörper sich gegenseitig berührenden Stellen mit einem sich bei Krafteinwirkung verformenden und/oder elastischen Belag versehen sein.

In einer einfachsten und kostengünstigsten Ausführung ist der Lochkörper als Platte mit einem Durchgangsloch oder Sackloch ausgebildet, wobei auch eine Ausbildung als Rohrkörper möglich ist, der sich beim Eintauchen des Verzögerungskörpers aufweitet.

Der Verzögerungskörper und das entsprechende Loch des Lochkörpers können bevorzugt einen kreisförmigen, jedoch auch einen vieleckigen Querschnitt aufweisen.

Der Lochkörper ist ortsfest fixiert und bremst dadurch das sich bewegende Aufnahmeelement beim Eintauchen des Verzögerungskörpers in das Loch des Lochkörpers ab.

Als Mittel zum Beschleunigen des Aufnahmeelements ist bevorzugt ein in der Bewegungsrichtung gegen eine Schlagfläche des Aufnahmeelements bewegbarer Schlagkörper vorgesehen. Dieser ist zweckmäßigerweise als Hammer ausgebildet, insbesondere als um eine Achse schwenkbarer und sich in Abhängigkeit seines Startschwenkwinkels infolge der Schwerkraft beschleunigender Hammer.

Die Schlagfläche des Aufnahmeelements und/oder die zu dieser Schlagfläche hin gerichtete Schlagfläche des Schlagkörpers ist in vorteilhafter Weise mit einem sich beim Schlag verformenden und/oder elastischen Element oder Belag versehen, durch das beziehungsweise durch den der Grad der Beschleunigung neben der Wahl der Masse des Schlagkörpers auch dessen Geschwindigkeit eingestellt werden kann.

Zwei Ausführungsbeispiele der Erfindung sind in der Zeichnung dargestellt und in der nachfolgenden Beschreibung näher erläutert. Es zeigen:
- Figur 1: eine Vorrichtung mit einem sich horizontal bewegenden Aufnahmeelement zur Aufnahme eines zu prüfenden Gegenstandes als erstes Ausführungsbeispiel der Erfindung und
- Figur 2: ein sich vertikal bewegendes Aufnahmeelement als zweites Ausführungsbeispiel der Erfindung.

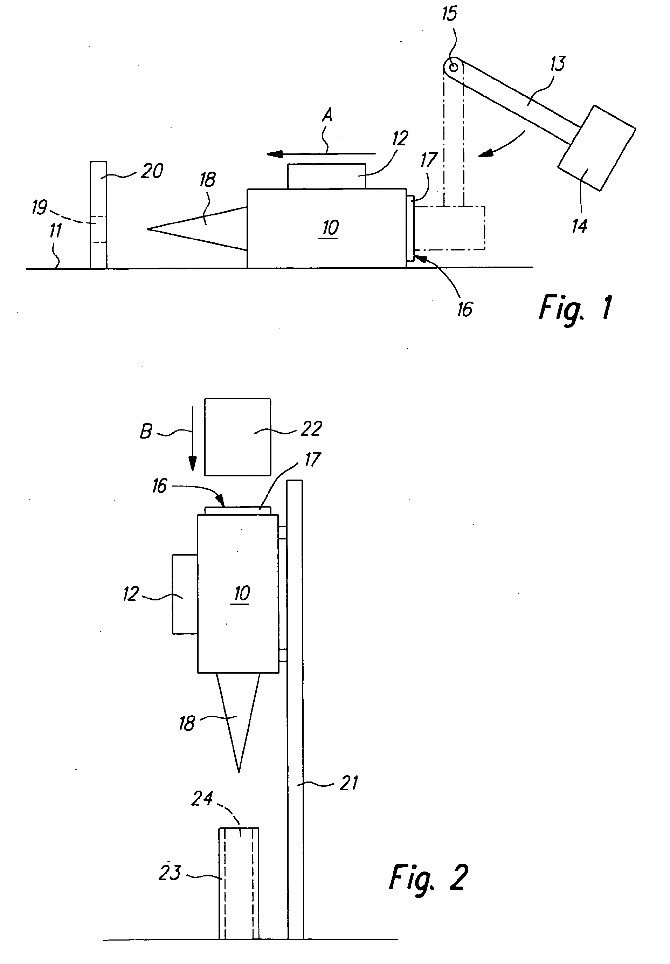

Bei dem in Figur 1 dargestellten ersten Ausführungsbeispiel ist ein schlittenartiges Aufnahmeelement 10 auf einer horizontalen Ebene oder Bahn 11 verschiebbar angeordnet. Dabei sollte die Reibung zwischen dem Aufnahmeelement 10 und der Bahn 11 durch die Wahl von Materialien mit geringem Reibungskoeffizienten oder Gleitführungen möglichst gering gehalten werden. Auf diesem Aufnahmeelement 10 ist ein zu prüfender Gegenstand 12 mit nicht dargestellten geeigneten Fixiermitteln fixiert, wobei die Fixiermittel so ausgebildet sein sollten, dass sie unterschiedliche Gegenstände fixieren können.

Bei den zu prüfenden Gegenständen 12 handelt es sich beispielsweise um elektrische oder elektronische Geräte oder feinmechanische Anordnungen, die daraufhin geprüft werden sollen, ob sie bei den bei ihrem späteren Einsatz zu erwartenden Beschleunigungen und Verzögerungen noch funktionsfähig bleiben.

Zur Beschleunigung des Aufnahmeelements 10 und damit des Gegenstands 12 dient ein als Hammer 13 ausgebildeter Schlagkörper, der an seinem dem Hammerkopf 14 entfernten Endbereich um eine horizontale Achse 15 schwenkbar gelagert ist. Er kann von seiner in Figur 1 hochgeschwenkt dargestellten Position losgelassen werden und schlägt dann gegen eine Schlagfläche 16 des Aufnahmeelements 10, wodurch dieses in der horizontalen Bewegungsrichtung A beschleunigt wird. Die Schlagfläche 16 ist dabei mit einem sich beim Schlag verformenden und/oder elastischen Element 17 versehen, dessen Form und Materialeigenschaften in Verbindung mit dem vom Hammer 13 erzeugten Impuls die Größe der Beschleunigung bestimmt. Bei diesem Element 17 kann es sich auch um einen entsprechenden Belag handeln. Der Impuls des Hammers 13 kann durch die Wahl der Masse seines Hammerkopfs 14 und seinen Schwenkwinkel bezüglich der vertikalen Position eingestellt werden. Es ist prinzipiell auch möglich, zusätzliche Mittel, beispielsweise Federmittel oder motorische Mittel, zur Beschleunigung des Hammers 13 oder eines sonstigen Schlagkörpers vorzusehen. Der Schlagkörper kann dabei prinzipiell anstelle einer Schwenkbewegung auch eine Linearbewegung durchführen.

Am vorderen Endbereich des Aufnahmeelements 10 oder auch an einer anderen Stelle am Aufnahmeelement 10 ist ein sich in der Bewegungsrichtung A verjüngender kegelförmiger Verzögerungskörper 18 angeordnet. Seine Kegelform kann dabei einen kreisförmigen Querschnitt oder einen vieleckigen Querschnitt aufweisen, wobei prinzipiell auch ovale oder sonstige Querschnitte denkbar sind.

Bei der infolge des Beschleunigungsvorgangs erzeugten Bewegung des Aufnahmeelements 10 in die Bewegungsrichtung A schiebt sich der Verzögerungskörper 18 nach einer einstellbaren Strecke in ein Durchgangsloch eines senkrecht zur Bewegungsrichtung A ortsfest fixierten plattenförmigen Lochkörpers 20. Der Durchmesser beziehungsweise Querschnitt des Durchgangslochs 19 ist kleiner als der größte Durchmesser beziehungsweise Querschnitt des Verzögerungskörpers 18. Dadurch bleibt der Verzögerungskörper 18 im Durchgangsloch 19 stecken und verzögert das Aufnahmeelement 10 und damit den Gegenstand 12, das heißt, bremst ihn ab. Beim Abbremsen verformt sich prinzipiell der Verzögerungskörper 18 und/oder das Durchgangsloch 19 in Abhängigkeit des jeweiligen Materials und der jeweiligen Materialstärke. Der Betrag der Verzögerung kann somit durch die Wahl der Materialien und deren Festigkeit sowie durch die Wahl des Öffnungswinkels des kegelförmigen Verzögerungskörpers 18 eingestellt werden. Aus Kostengründen ist es günstiger, wenn sich der einfach und billig herzustellende Lochkörper 20, nicht dagegen der Verzögerungskörper 18 verformt. Beide bestehen beispielsweise aus Metall, wobei durch geeignete Maßnahmen erreicht werden sollte, dass sich der Verzögerungskörper 18 so gut wie nicht, dagegen der Lochkörper 20 verformt. Dies kann beispielsweise dadurch erreicht werden, dass der Lochkörper 20 aus einem weicheren Material und/oder aus einem sehr dünnwandigen Material hergestellt ist, während der Verzögerungskörper 18 beispielsweise aus Vollmaterial besteht oder sehr dicke Wandungen besitzt. Je dünnwandiger und weicher das Material des Lochkörpers 20 und je kleiner der Öffnungswinkel des kegelförmigen Verzögerungskörpers 18 ist, desto geringer ist der Verzögerungswert, der auf diese Weise nahezu beliebig eingestellt werden kann. Grundsätzlich kann als Material für den Verzögerungskörper 18 und/oder den Lochkörper 20 auch ein Kunststoffmaterial mit geeigneten Eigenschaften eingesetzt werden.

Als weitere Maßnahme zur Beeinflussung der Verzögerung kann auch der Verzögerungskörper 18 und/oder das Durchgangsloch 19 an seinem Umfang mit einem elastischen oder sich leicht verformenden Material versehen, beispielsweise beschichtet sein. Dies bietet eine weitere Möglichkeit zur Einstellung der gewünschten Verzögerung.

Falls der Lochkörper 20 eine wesentlich größere Dicke besitzt und beispielsweise als quaderförmiges Element ausgebildet ist, kann das Durchgangsloch 19 auch als Sackloch ausgebildet sein.

Anstelle von einem Verzögerungskörper 18 können auch mehrere Verzögerungskörper vorgesehen sein, die sich alle in der Bewegungsrichtung A verjüngen und in entsprechende Löcher oder Durchgangslöcher 19 eines oder mehrerer Lochkörper eingreifen.

Bei dem in Figur 2 dargestellten zweiten Ausführungsbeispiel ist das Aufnahmeelement 10 an einer vertikalen Führungseinrichtung 21 vertikal geführt. Die Bewegungsrichtung B ist dadurch vertikal nach unten gerichtet. Die Beschleunigung erfolgt durch einen Schlagkörper 22, der von oben her gegen die Schlagfläche 16 des Aufnahmeelements 10 schlägt. Der Schlagkörper 22 kann dabei selbst durch Schwerkrafteinfluss beschleunigt werden, oder es sind zusätzliche Beschleunigungsmittel, beispielsweise Federmittel oder motorische Mittel, vorgesehen. Der Schlagkörper 22 kann ebenfalls auch als Hammer ausgebildet sein. Ein Lochkörper 23 ist als Rohr ausgebildet, in das der Verzögerungskörper 18 eintaucht und dadurch bei der Verzögerung den rohrförmigen Lochkörper 23 aufweitet. Als Loch 24 dient dabei die zum Verzögerungskörper 18 hinweisende Rohrmündung beziehungsweise der Rohrkanal des rohrförmigen Lochkörpers 23.

Auch hier kann in der bereits beschriebenen Weise der Betrag der Verzögerung wiederum durch entsprechende Materialien eingestellt werden, insbesondere durch das Material des rohrförmigen Lochkörpers 23, durch den Rohrdurchmesser und die Dicke der Rohrwandung. Weiterhin kann auch hier die Rohrinnenfläche und/oder der Verzögerungskörper 18 mit einer sich verformenden oder elastischen Schicht versehen sein.

Selbstverständlich sind Einzelkomponenten der beiden Ausführungsbeispiele untereinander austauschbar. So kann auch beim ersten Ausführungsbeispiel ein rohrförmiger Lochkörper und beim zweiten Ausführungsbeispiel ein platten- oder quaderförmiger Lochkörper eingesetzt werden.

Sind beim zweiten Ausführungsbeispiel mehrere Verzögerungskörper 18 vorgesehen, so muss selbstverständlich eine entsprechende Zahl von rohrförmigen oder zylindrischen Lochkörpern 23 vorgesehen sein.

Die beiden beim Verzögerungsvorgang miteinander in Kontakt tretenden Flächen des Verzögerungskörpers 18 und des Lochkörpers 20 beziehungsweise 23 können zur Beeinflussung beziehungsweise Einstellung des Verzögerungswerts auch mit einer Oberflächenstruktur versehen sein, beispielsweise mit einer Riffelung, einer noppenartigen Oberfläche oder dergleichen.

Um zu verhindern, dass der Verzögerungskörper 18 nach dem Abbremsvorgang wieder aus dem Loch elastisch in die der Bewegungsrichtung entgegengesetzte Rückwärtsbewegung zurückfedert bzw. zurückprallt, kann der Verzögerungskörper 18 an einer Stelle, an der sein Querschnitt im Wesentlichen dem des Loches 19, 24 entspricht mit einer ein solches Zurückprallen verhindernden Sperreinrichtung versehen sein. Als Sperreinrichtung eignet sich beispielsweise wenigstens eine Rasterhebung, die als Ringerhebung ausgebildet sein kann und die bei der Vorwärtsbewegung in das Loch hinein unter Verformung das Loch passiert, dann jedoch rast- oder klinkenartig eine Rückwärtsbewegung verhindert.

## Patentansprüche

1. Vorrichtung zum Prüfen des Verhaltens von Gegenständen, insbesondere von elektronischen Geräten, bei positiven und negativen Beschleunigungsvorgängen, mit einem Aufnahmeelement, an dem zu prüfende Gegenstände fixierbar sind, mit Mitteln zum Beschleunigen des Aufnahmeelements und mit Mitteln zum Abbremsen des sich infolge des Beschleunigungsvorgangs bewegenden Aufnahmeelements, **dadurch gekennzeichnet, dass** das Aufnahmeelement (10) als Mittel zum Abbremsen wenigstens einen sich in der Bewegungsrichtung (A; B) verjüngenden kegelförmigen Verzögerungskörper (18) aufweist, wobei in der Bewegungsrichtung (A; B) vor dem Aufnahmeelement (10) wenigstens ein Lochkörper (20; 23) angeordnet ist, der ein in der Bewegungsbahn des Verzögerungskörpers (18) liegendes Loch (19; 24) aufweist, dessen Querschnitt kleiner als der größte Querschnitt des Verzögerungskörpers (18) senkrecht zur Bewegungsbahn (A; B) ist.

2. Vorrichtung nach Anspruch 1, **dadurch gekennzeichnet, dass** der Verzögerungskörper (18) und/oder der Lochkörper (20; 23) aus einem sich bei gegenseitiger Krafteinwirkung verformenden Material bestehen, vorzugsweise Metall und/oder Kunststoff.

3. Vorrichtung nach einem der vorhergehenden Ansprüche, **dadurch gekennzeichnet, dass** der Verzögerungskörper (18) und/oder der Lochkörper (20; 23) wenigstens an den beim Eintauchen des Verzögerungskörpers (18) in den Lochkörper (20; 23) sich gegenseitig berührenden Stellen mit einem sich bei Krafteinwirkung verformenden und/oder elastischen Belag versehen sind.

4. Vorrichtung nach einem der vorhergehenden Ansprüche, **dadurch gekennzeichnet, dass** der Lochkörper (20; 23) als Platte mit einem Durchgangsloch (19) oder Sackloch oder als Rohrkörper ausgebildet ist.

5. Vorrichtung nach einem der vorgehenden Ansprüche, **dadurch gekennzeichnet, dass** der Verzögerungskörper (18) und das Loch (19; 24) jeweils einen kreisförmigen oder vieleckigen Querschnitt aufweisen.

6. Vorrichtung nach einem der vorhergehenden Ansprüche, **dadurch gekennzeichnet, dass** der Lochkörper (20; 23) ortsfest fixiert ist.

7. Vorrichtung nach einem der vorhergehenden Ansprüche, **dadurch gekennzeichnet, dass** als Mittel zur Beschleunigung des Aufnahmeelements (10) ein in der Bewegungsrichtung (A; B) gegen eine Schlagfläche (16) des Aufnahmeelements (10) bewegbarer Schlagkörper (13; 22) vorgesehen ist.

8. Vorrichtung nach Anspruch 7, **dadurch gekennzeichnet, dass** der Schlagkörper (13) als Hammer ausgebildet ist, insbesondere als um eine Schwenkachse (15) schwenkbarer und sich in Abhängigkeit seines Startschwenkwinkels infolge der Schwerkraft beschleunigender Hammer.

9. Vorrichtung nach Anspruch 7 oder 8, **dadurch gekennzeichnet, dass** die Schlagfläche (16) des Aufnahmeelements (10) und/oder die zu dieser Schlagfläche (16) hin gerichtete Schlagfläche des Schlagkörpers (14; 22) mit einem sich beim Schlag verformenden und/oder elastischen Element oder Belag versehen ist.

10. Vorrichtung nach einem der vorhergehenden Ansprüche, **dadurch gekennzeichnet, dass** der Verzögerungskörper (18) an einer Stelle, an der sein Querschnitt im Wesentlichen dem des Loches (19; 24) entspricht, mit einer ein Rückprallen nach Beendigung der Verzögerungsbewegung verhindernden Sperreinrichtung versehen ist, die insbesondere als das Loch (19; 24) unter Verformung passierende Rasterhebung ausgebildet ist.
